# EUROPEAN PATENT APPLICATION

(11) **EP 1 640 566 A1**
(43) Date of publication of application: **29.03.2006**
(21) Application number: 04747052.1
(22) Date of filing: 30.06.2004
(51) Int. Cl.: F01L 1/26, F16C 33/24

(54) **WEAR-RESISTANT SLIDE MEMBER AND SLIDE DEVICE USING THE SAME**

(30) Priority: 01.07.2003 JP 2003189698; 01.07.2003 JP 2003189682; 01.07.2003 JP 2003189680
(71) Applicant: Sumitomo Electric Industries, Ltd., Osaka-shi, Osaka 541-0041 (JP)
(72) Inventor: YAMAMOTO, Takehisa, c/o Itami Works, Itami-shi, Hyogo 664-0016 (JP); HIGAKI, Kenjiro, c/o Itami Works, Itami-shi, Hyogo 664-0016 (JP); TSUZUKI, Yasushi, c/o Itami Works, Itami-shi, Hyogo 664-0016 (JP)
(74) Representative: Cross, Rupert Edward Blount
(86) International application number: PCT/JP2004/009583
(87) International publication number: WO 2005/003522

(57) **Abstract**

An object of the present invention is to provide a wear-resistant sliding part with a wear-resistant member to reduce wear of contacting portions of two parts which moves in linkage with each other such as a valve bridge and a rocker arm in a valve train system of a diesel engine, wherein the wear-resistant member is held in a recess of a receiving part securely not to fall off and allowed in the recess to rotate and move in the parallel direction to its bottom surface. Also the wear-resistant member is arranged with at least one of the following : a chamfer provided at the perimeter of bottom surface; the bottom surface with the flatness from 0.05 to 0.20 µm and a convex shape of a raised-up outer side; and at least one of the bottom, side, and top surfaces having surface roughness (Ra) of 0.2 µm or less.

## Description

### Technical Field

The present invention relates to a wear-resistant sliding part, and to a sliding mechanism using the part.

### Background Art

Sliding parts used for sliding portions transmitting driving power in apparatuses for transportation in space, land, sea and air, manufacturing apparatuses in factories and electric/electronic apparatuses are required to be much lighter in weight, much more resistant to their operating environment, and much lower in price, and levels of such requirements are becoming more diversified depending on environments of the sliding portions.
Among apparatuses mentioned above, transportation apparatuses are used under the severest environment, and their sliding portions are required to exhibit particularly excellent sliding performances. This is exemplified by adoption of exchange gas circulation (EGR) in diesel engines for improved performance in reduction of nitrogen oxides and by valve bridges and rocker arms in the same engines designed for improvement of engine performance. The latter example is used in the following to describe the background art of the present invention.

Parts such as valve bridges and rocker arms described above are required to satisfy rigorous requirements for improved wear resistance. In order to satisfy these requirements in two parts moving in linkage with each other, it has been proposed to reduce wear on the sliding portions (sliding surfaces) of the parts by making a recess at the contacting surface of one part, for example, a valve bridge that is contacted by a rocker arm, and then inserting a wear-resistant member in the recess so that the other part (rocker arm) makes contact with the wear-resistant member. A wear-resistant sliding part adopting this kind of wear-resistant member is disclosed in the Japanese Patent Publication No. 2963241 (Reference 1). The sliding part depends thoroughly on the characteristics of the wear-resistant member in improvement of wear resistance, and no further effects to suppress wear than the ability of the wear-resistant member are expected. In this case, an elastic member that is formed by integral molding in the recess is used to apply pressure to the body of the wear-resistant member to hold the wear-resistant member in the recess. This arrangement is adopted in order to prevent deterioration of durability of the wear-resistant member made from ceramics due to chipping and residual stresses and to fix the member in the recess in a way that it does not easily fall off, and the arrangement itself has no effects in improving wear resistance of the contact surface.

Such parts as valve bridges and rocker arms have short life time because of their limited range of sliding movement during their linkage operation, which causes local wear even when a wear member is made from material such as ceramics.

The present invention aims at effective suppression of the above-described local wear for the purpose of extending life of such parts as exemplified above that move in linkage with each other while contacting each other.

### Disclosure of Invention

The sliding part of the present invention is an assembly comprising a first part and a second part that move in linkage with each other and a wear-resistant member that stands in between the contacting portions of the two parts, wherein the wear-resistant member inserted in a recess provided in the second part in a state that it is protected from falling off from the recess and it is allowed in the recess to rotate and move in the parallel direction to the bottom surface, the bottom surface of the wear-resistant member makes contact with the bottom surface of the recess and the first part makes contact with the top surface of the wear-resistant member, allowing the first and the second parts to move.

A wear-resistant sliding part of the first embodiment of the present invention is an assembly mentioned above with a chamfered portion formed to eliminate the edge of perimeter of the bottom surface of the wear-resistant member. It is also possible to form a chamfer to remove the edge of perimeter of the top surface of the wear-resistant member, which also contributes to the extension of life of the part.

A wear-resistant sliding part of the second embodiment of the present invention is the same assembly as mentioned above with the bottom surface of the wear-resistant member finished with the flatness in the range from 0.05 to 20 µm and formed into a convex shape in which the outer side is raised up.

The convex shape of the bottom surface of the wear-resistant member is specified by the surface's flatness, which in this case is defined as the maximum surface deviation from the reference cross-section profile that is obtained by performing a cross section profile measurement with a surface roughness measurement instrument with a vertical magnification of 5000.

In addition, it is preferable that this flatness of the bottom surface is greater than the flatness of the bottom surface of the recess provided in the second part.

A wear-resistant sliding part of the third embodiment of the present invention is the same assembly that corresponds to the first and second embodiments of the present invention with at least one of the following surfaces having a surface roughness (Ra) of 0.2 µm or less: the bottom surface of the wear-resistant member making contact with the bottom surface of the recess provided in the second part; the side surface of the wear-resistant member making contact with the inner radial surface of the recess; and the top surface of the wear-resistant member making contact with the first part.

In addition, sliding parts that are a combination of at least two of said first, second and third embodiments are included in sliding parts of the present invention.

Materials for the wear-resistant member of the present invention can be an Fe-Cr-based sintered alloy, a super hard alloy, or ceramics, and among these materials, ceramics are especially preferable because they are light in weight and highly wear-resistant. Among ceramics, silicon nitride ceramics, which are light in weight and highly wear-resistant, and especially those with the bending strength of 800 MPa or more and Vickers hardness of 1,400 or more are more preferable than others.

The present invention also includes sliding mechanisms including sliding equipment using said wear-resistant sliding parts. Further, parts in the present invention, as exemplified hereafter, can suitably be used in parts of valve train systems such as valve bridges and rocker arms, but their applications in sliding mechanisms are not limited to them. If two parts move while making contact with a wear-resistant member that stands in between the two parts and experience sliding friction due to the movement, they are candidates for use of the parts of the present invention and are expected to deliver their benefits.

When rotation and movement in the radial direction of the wear-resistant member in the recess in the sliding part of the present invention are allowed, force transmitted from one part to the contact surface during movement of the two parts causes the wear-resistant member to move in the parallel direction to its bottom surface or to rotate, which causes the contact points on the wear-resistant member for the two parts to vary constantly, preventing local wear and reducing wear of the contact surface.

### Brief Description of Drawings

Figure 1 is a sliding portion of a valve bridge in accordance with an embodiment of the present invention in a 4-valve diesel engine.
Figure 2 is a cross section of contacting portion of the valve bridge and rocker arm of Fig.1.
Figure 3 is an enlarged cross section of mounting portion of the wear-resistant member in the sliding part in accordance with the first embodiment of the present invention.
Figures 4A and 4B are examples of chamfers introduced at the perimeter edge of the bottom surface of the wear-resistant member of Fig. 3.
Figure 5 is an example of chamfer introduced at the perimeter edge of the upper surface of the wear-resistant member of a sliding part in accordance with the first embodiment of the present invention.
Figure 6 is an enlarged cross section of mounting portion of a wear-resistant member in a sliding part in accordance with the second embodiment of the present invention.
Figures 7A and 7B are examples of shape of the bottom surface of the wear-resistant member of Fig.6.
Figure 8 is a schematic diagram of measurement method of the cross section profile used to define the flatness.
Figure 9 is an example of measurement of the cross section profile that is used to define the flatness.
Figure 10 is an enlarged cross section of mounting portion of a wear-resistant member in a sliding part in accordance with the third embodiment of the present invention.
Figure 11 shows the surfaces of the wear-resistance member of Fig. 10.

### Best Mode for Carrying Out the Invention

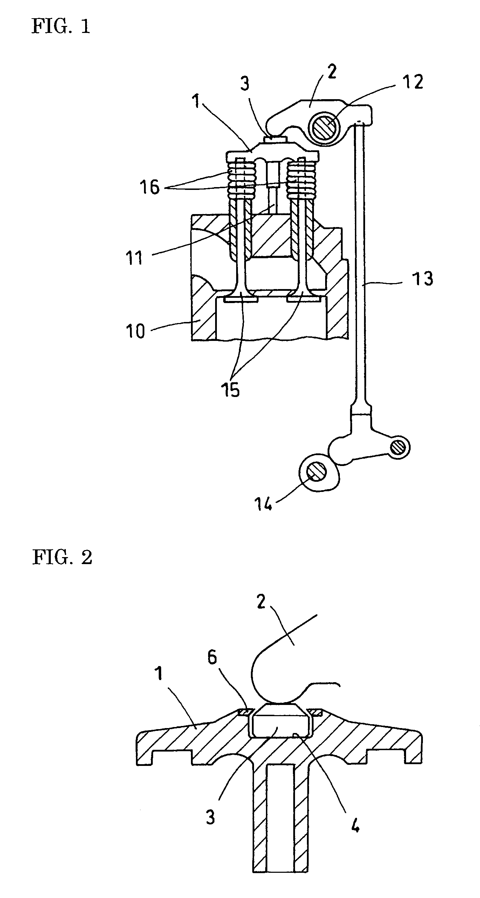

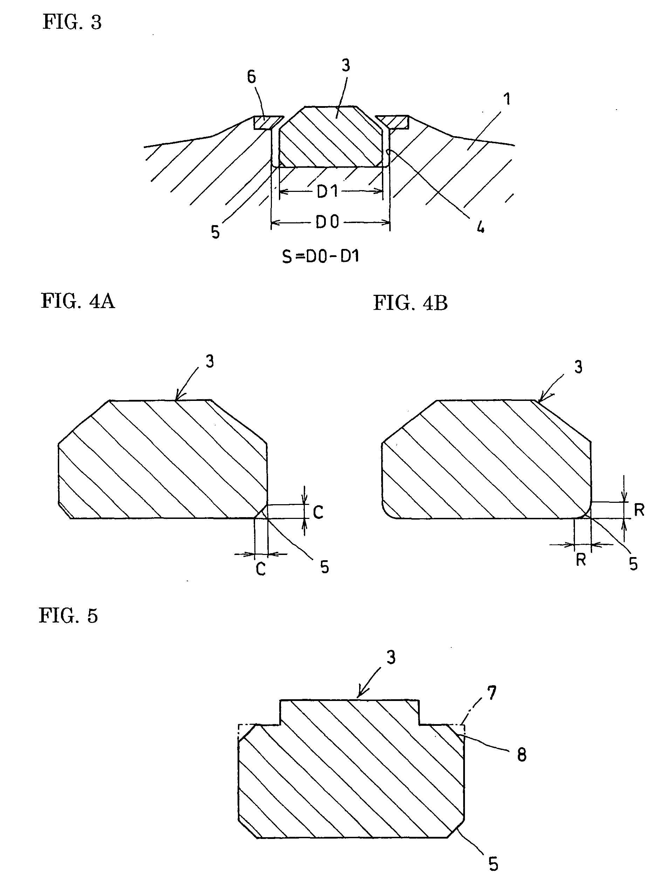

Embodiments of the present invention are described hereafter by taking the valve bridge of a 4-valve diesel engine shown in Fig.1 as an example and by using related figures. Figure 1 shows an example of valve train parts for a multi-valve engine. Figure 1 includes a valve bridge 1, a rocker arm 2, and a wear-resistant member 3. Valve bridge 1 is guided by a guide pin 11, which is provided to project vertically on a cylinder head 10, and moves upward and downward. Rocker arm 2 is supported by a rocker shaft 12 to be able to swing about a fixed point, and an end of rocker arm 2 is pushed up by a push rod 13. This movement of pushing up and release of the same movement are repeated in association with the rotation of a cam shaft 14 alternatively to cause a swinging movement of rocker arm 2. In turn, the swinging movement of rocker arm 2 pushes down valve bridge 1, which is in contact with the other end of rocker arm 2, and causes two valves 15, which are in contact with valve bridge 1 on their stem, to open at the same time. When suppression by rocker arm 2 is released, two valves 15 are pushed up by the force of valve-shutting springs 16 and close simultaneously. With this process, valve bridge 1 is pushed back to its original position. As thus described, valve bridge 1 and rocker arm 2 are parts used for opening and shutting two valves 15 in coincidence with combustion in an engine. Wear-resistant member 3 is a round shape piece when viewed from above with the outer diameter at the top portion made smaller than that of the bottom portion. As shown in Fig.2 and Fig.3, wear-resistant member 3 is mounted on valve bridge 1 in a way that it is inserted in recess 4 formed at the top center portion of valve bridge 1.

In this example, the first part of the sliding part of the present invention is wear-resistant member 3, and the second part is valve bridge 1, which is in contact with and moves in linkage with the first part. The inner diameter D0 of recess 4 in this example is designed to be larger than the outer diameter D1 of wear-resistant member 3 shown in Fig.3. In addition, at the opening of recess 4, a stopper member 6 is mounted to prevent wear-resistant member 3, which is inserted in recess 4, from falling off. Further, an alternative to this is to form a stopper portion by changing the shape of perimeter of the opening of recess 4. The stopper portion made by shaping the perimeter of the opening to protrude inward does not cause interference with wear-resistant member 3, and therefore smooth rotation and movement of wear-resistant member 3 are not hindered.

As shown in the above example, the sliding parts of the present invention described hereafter have the following benefits in common. The first part contacting and moving in linkage with the second is allowed to rotate and move smoothly by the second part. In this example, allowing rotation and movement in the radial direction of the wear-resistant member in the recess causes the wear-resistant member to move in the direction parallel to its bottom surface or to rotate in response to the force applied by the other part on the contacting surface during movement of the two parts, which causes the contact points on the wear-resistant member of the two parts to vary constantly, thus preventing local wear and reducing wear of the contact surface.

By referring to this example, a sliding part in accordance with the first embodiment of the present invention is described in the following. Exemplified wear-resistant member 3 is, for example, made from silicon nitride ceramics.

At the perimeter edge of the bottom surface of wear-resistant member 3, a chamfer 5 is formed to eliminate a sharp edge of the corner. Figure 4 shows an enlarged cross section including an example of chamfer 5 formed at the corner.

The shape of the chamfer may be of any geometry as far as the benefit of the present invention, which is a smooth linkage movement of two parts, is present. For example, the geometry of this chamfer may be in a way that its cross section at any circumferential position is identical or in a way that the cross section varies depending on the positions.

Chamfer 5 of Fig. 4 may be either a flat chamfer shown in Fig. 4A or a rounded chamfer shown in Fig. 4B. The width of chamfer 5 should be 0.05 mm or more, more preferably 0.2 mm or more, and most preferably 0.4 mm or more. The introduction of this chamfer 5 prevents the bottom surface of recess 4 from catching wear-resistant member 3 and ensures smooth movement or rotation of wear-resistant member 3 in recess 4.

The extent of chamfering is preferably 20 % or less of the diameter of wear-resistant member 3, and chamfering within this range does not have a concern of deterioration of the standing stability of wear-resistant member 3. In addition, if the corner angle portion (bottom corner) of recess 4 is not exactly perpendicular and has a flat or rounded fillet due to a process-related reason or in order to prevent stress concentration, it is preferable that the chamfering of perimeter of the bottom surface of wear-resistant member 3 is made larger than the width of a flat or round fillet of the bottom corner of recess 4, so that there would be no possibility of wear-resistant member 3 lying on the flat or rounded fillet of the bottom corner of recess 4. On wear-resistant member 3, chamfering of the perimeter edge can be made for the perimeter edge of the upper surface as well. In the case that wear-resistant member 3 is designed in a shape having a step at the perimeter as shown in Fig. 5, the edge of a perimeter 7 is sharper than those of the cases shown in Fig. 3 and Fig. 4 and there is a possibility for this edge to come into contact with and damage the inner radial surface of recess 4. However, this trouble can be avoided by forming a chamfer 8 at perimeter 7 to remove the sharp edge.

As thus described, the sliding part in accordance with the first embodiment of the present invention has a chamfer to eliminate the edge of perimeter of the bottom surface of the wear-resistant member, which prevents the bottom surface of the recess from catching the edge and ensures smooth movement and rotation of the wear-resistant member in the recess. Because of this, motion of the contact point occurs smoothly and reliably and an effect of preventing local wear is reliably obtained. In addition, if a chamfer is introduced at the perimeter edge of the top surface of the wear-resistant member, scratches on the inner radial surface of the recess by the contact of the edge of perimeter of the top surface are prevented.

Next, by referring to the example shown in Fig. 1, a sliding part in accordance with the second embodiment of the present invention is described.

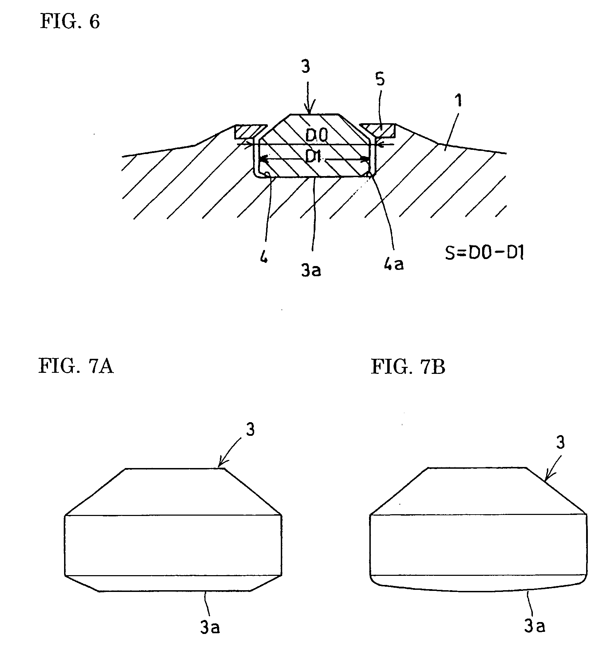

Figure 6 is a schematic diagram of mounting of parts of the sliding portion of Fig. 1. Wear-resistant member 3 exemplified in this figure is, for example, made from silicon nitride ceramics. The bottom surface 3a of this wear-resistant member 3 is finished to have the flatness in the range of 0.05 to 20 µm and a convex shape with the outer circumference raised up. This member is inserted into recess 4 in the second part having the flat bottom surface 4a, and wear-resistant member 3 is prevented from falling off by such measures as installing of stopper member 5 at the opening of recess 4. An alternative to this is to form a stopper portion by changing the shape of perimeter of the opening of recess 4. The stopper portion made by shaping the perimeter of the opening to protrude inward does not cause interference with wear-resistant member 3, and therefore smooth rotation and movement of wear-resistant member 3 are not hindered.

Figure 7 shows enlarged diagrams of the shape of bottom surface of wear-resistant member 3. Bottom surface 3a may be either a surface of which central part is flat and outer portion is raised up as shown in Fig. 7A or a surface that is curved in its entirety as shown in Fig. 7B. The convex shape of this bottom surface 3a is, as mentioned above, defined by a flatness.

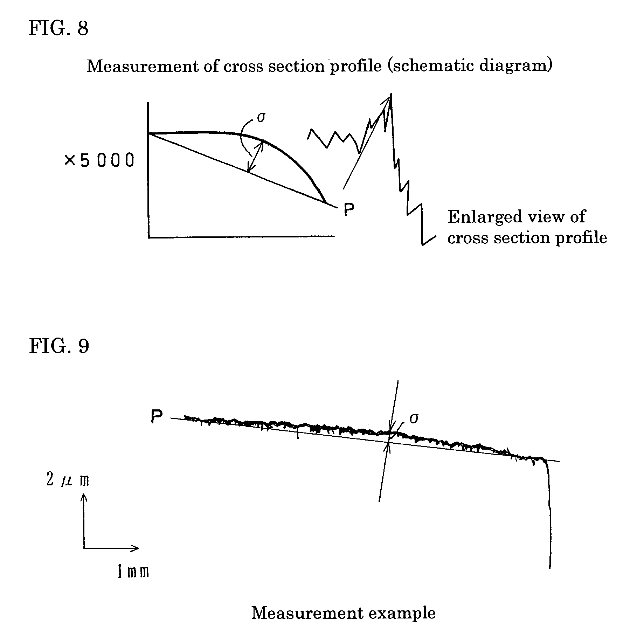

Figure 8 shows how to determine the flatness. As shown in the figure, the cross section profile of bottom surface 3a is measured with a vertical magnification of 5,000, and the maximum surface deviation from the reference surface P is determined, which is defined as the flatness. Figure 9 shows an example of measurement. In this example, the maximum of surface deviation from the reference surface P is σ, and therefore o is the value that represents the flatness.

The flatness of bottom surface 3a of wear-resistant member 3 is preferably 0.1 µm or more, and is more preferably 0.3 µm or more. This is because lubrication oil supplied to the contacting interface during the time wear-resistant member 3 slides on the bottom surface of recess 4 becomes insufficient when the flatness is less than 0.1 µm. The range of flatness which is less than 0.1 µm mentioned here includes the surface shape with its central portion being concave. The flatness of more than 20 µm makes wear-resistant member 3 to have poor standing stability.

In addition, although bottom surface 4a of recess 4 is usually prepared as a flat surface because of process-related reasons, if this bottom surface 4a is made to have a concave shape, the flatness of bottom surface 3a of the wear-resistant member should be made larger than the flatness of bottom surface 4a of the recess so that the central part of bottom surface 3a of the wear-resistant member is not lifted away from bottom surface 4a of the recess. If it is lifted away, the entrance to the contacting interface is closed, and supply of lubricant oil to the contacting interface and movement of the wear-resistant member in the radial direction will be hindered.

As described above, the sliding part in accordance with the second embodiment of the present invention has the wear-resistant member with its bottom surface having the flatness of 0.05 to 20 µm and a convex shape in which the outer circumference is raised up, and therefore when this wear-resistant member moves or rotates in the recess, it is easy for lubrication oil to flow into the interface between the bottom surface of the wear-resistant member and the bottom surface of the recess, resulting in improved lubrication and smooth movement and rotation of the wear-resistant member. Because of this, the contact point on the wear-resistant member reliably moves as the parts move, and the range of this motion becomes larger, and therefore local wear is suppressed effectively.

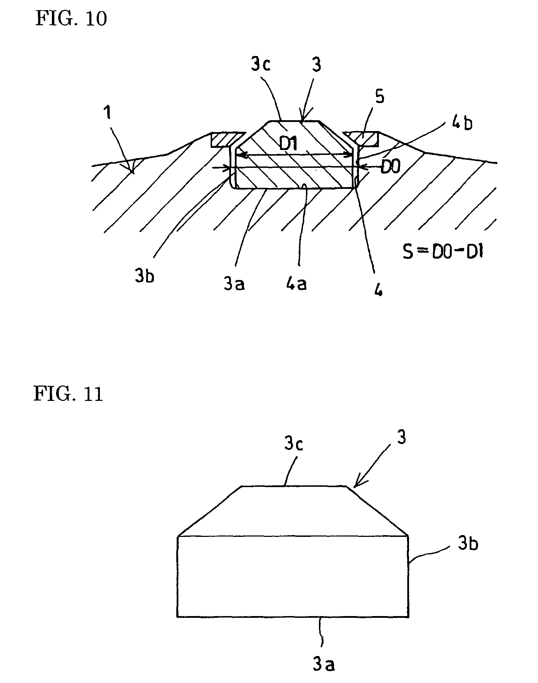

Next, a sliding part in accordance with the third embodiment of the present invention is described by referring to the example in Fig. 1. Figure 10 is a schematic diagram of mounting of parts in the sliding portion of Fig. 1. In this figure, wear-resistant member 3 is a round shape piece when viewed from above with the outer diameter at the top portion made smaller than that of the bottom portion. As shown in Fig.2 and Fig.10, this wear-resistant member 3 is mounted on valve bridge 1 in a way that it is inserted in recess 4 formed at the top center portion of valve bridge 1.

Exemplified wear-resistant member 3 is, for example, made from silicon nitride ceramics. Bottom surface 3a, the side surface (outer circumferential surface) 3b and the top surface 3c shown in Fig. 11 are all finished in the surface roughness (Ra) of 0.2 µm or less, and this wear-resistant member 3 with the three surfaces thus specified is inserted in recess 4. In order to prevent wear-resistant member 3 from falling off, an arrangement such as stopper member 5 is provided at the opening of recess 4. An alternative to this stopper member 5 is to form a stopper portion by changing the shape of perimeter of the opening of recess 4. The stopper portion made by shaping the perimeter of the opening to protrude inward does not cause interference with wear-resistant member 3, and therefore smooth rotation and movement of wear-resistant member 3 are not hindered.

If the surface roughness (Ra) of bottom surface 3a is 0.2 µm or less, wear-resistant member 3 smoothly moves and rotates in recess 4 because the friction coefficient with the bottom surface of recess 4 becomes lower. Therefore, the surface roughness (Ra) of bottom surface 3a of wear-resistant member 3 is kept at 0.2 µm or less. The surface roughness (Ra) of bottom surface 3a is preferably 0.15 µm or less, and especially when Ra is 0.1 µm or less, movement of wear-resistant member 3 becomes much smoother, and much better effect of wear suppression can be obtained. In addition, when side surface 3b of wear-resistant member 3 has the surface roughness (Ra) of 0.2 µm or less, the friction coefficient with the inner radial surface of recess 4 decreases, and smooth movement and rotation of wear-resistant member 3 are not hindered by the friction with the side surface. Therefore, the surface roughness (Ra) of side surface 3b is preferably 0.2 µm or less and more preferably 0.15 µm or less.

In addition, in this example, if the surface roughness (Ra) of top surface 3c of wear-resistant member 3 is 0.2 µm or less, the wear of rocker arm 2 becomes less. Therefore, the surface roughness (Ra) of top surface 3c should be 0.2 µm or less. The surface roughness (Ra) of this top surface 3c is preferably 0.15 µm or less and more preferably 0.10 µm or less.

In addition, in any of the sliding parts according to the first, second or third embodiment of the present invention, the difference between the outer diameter D1 of wear-resistant member 3 and the inner diameter D0 of recess 4 (S = D0 - D1) is preferably 0.03 mm or more and, if possible, 0.1 mm or more. If the diameter difference S is less than 0.03 mm, the motion range of wear-resistant member 3 is insufficient and the benefits of the present invention are difficult to be obtained. In addition, if the diameter difference S is less than 0.03 mm, wear-resistant member 3 is difficult to be inserted into recess 4, which makes control of fabrication more complicated and leads to a cause of high fabrication cost. Further, there is no particular upper limit to be observed for the diameter difference S. However, it is preferable to keep the diameter difference S to be approximately 10 % of the outer diameter D1 of wear-resistant member 3, because then wear-resistant member 3 will not become unnecessarily large.

In addition, as mentioned earlier, sliding parts that are combinations of at least two of the first, second and third embodiments are included in embodiments of the present invention. By combining two or more embodiments, parts that are more suitable to the purpose of the present invention can be obtained. Such embodiments will be described later in embodiment examples.

The major embodiments of the sliding parts in the present invention have been described so far, and the concept is effective to all sliding parts that belong to a mechanism in which two parts keep contact with each other while one part moves with certain degrees of freedom with reference to the other part.

In addition, materials for the wear-resistant member suitable for sliding parts of the present invention, including sliding parts used in valve train systems of automobiles, include, for example, an Fe-Cr-based sintered alloy, a super hard alloy, or ceramics, and among these materials, ceramics are especially preferable because they are light in weight and highly wear-resistant. Among ceramics, silicon nitride ceramics, which are light in weight and highly wear-resistant, and especially those with the bending strength of 800 MPa or more and the Vickers hardness of 1,400 or more are more preferable than others. If the Vickers hardness is less than 1,400, the material's wear-resistance is insufficient and there is a higher risk that wear will grow. When silicon nitride ceramics with said preferred specification are used, risks of having cracks and chippings during the use are considerably lowered.

Silicon nitride ceramics in this case are produced by, , mixing, for example, silicon nitride powder of an average particle size of 5 µm or less having 50% or more of alpha ratio of crystallization with 5 to 15 weight % sintering additive powder consisting of at least one of oxides of Al, Mg, Ca or Ti or complex oxides of them of an average particle size of 5 µm or less, forming the mixed powder's so that its relative density is 45% or more, pre-treating in atmospheric air of which temperature is 1,000° C or less, and then sintering the pre-treated green compact in an inert atmosphere until its relative density becomes 99 % or more. In addition, the wear-resistant member and surrounding parts preferably have good heat conductivity, namely at least 10 W/mK or more, for good heat dissipation during sliding movement.

As effective materials for sliding portions including the sliding member of the present invention, various candidate materials can be listed depending on types of materials used for the counter part or apparatuses in which they are used. Materials for the first and second parts of the sliding part of the present invention, including the sliding member, can be any materials as long as the effects that have been mentioned above are obtained. For example, not only the materials mentioned above, but also various kinds of inorganic materials such as ceramics and metals, with low friction coefficient, can be used. Organic materials such as resins can be used depending on applications with comparatively light load even in the same mechanism. Furthermore, materials with a same composition but with different structures such as squamous structures or other special structures, or various kinds of composite materials incorporating a material of which structure is controlled in a scale of nanometers can be selected depending on applications. In the case of the sliding part of the present invention, it is possible to use a construction in which only the first and second sliding parts or the contacting portion of the sliding member is made from a wear-resistant material.

The present invention further includes various types of sliding apparatus using the above-described sliding parts. One representative example of such mechanisms is the apparatus for a valve train system used in an automobile engine, which is referenced in the above description, and this mechanism can be applied to any kind of sliding apparatus using the same basic mechanism. For example, it can be widely applied to various kinds of apparatuses having sliding portions, such as transportation apparatuses of space, land, sea and air, manufacturing apparatuses in factories and electric/electronic apparatuses including apparatuses for electric power generation. Some of the applications are described in the following embodiments.

### Embodiment 1

Recess 4 is prepared in valve bridge 1 of a four-valve diesel engine shown in Fig. 1, and wear-resistant member 3 described in Table I, made from silicon nitride ceramics or other materials is inserted in said recess 4, with a rocker arm 2 arranged to make contact with the top surface of said wear-resistant member 3. Two kinds of wear-resistant member 3 are used; one with a flat chamfer at the perimeter edge of the bottom surface as shown in Fig. 4A and the other with no chamfer (specimen 1). In total, 17 combinations, shown in Table I, of material, chamfer size and other attributes were used. The outer diameter of wear-resistant member 3 is made to be 8.0 mm, and the wear-resistant member 3 is inserted into recess 4, of which inner diameter is 8.15 mm and the radius of corner fillet is as shown in Table I. Stopper member 6 was mounted to prevent wear-resistant member 3 from falling off. Wear-resistant member 3 was kept in a state in which it was allowed to rotate in recess 4 and to move in the radial direction within the range of play between the member and the inner radial surface of recess 4. Other attributes not listed in the table are the surface roughness of the bottom surface of the recess of the wear-resistant part 2 that receives the wear-resistant member, which is 0.2 pm, the flatness of the bottom surface of the wear-resistant member, which is 0.04 µm, and the surface roughness (Ra) of the bottom, side and top surfaces of the wear-resistant member, which is 0.4 µm.

Valve bridge 1 and rocker arm 2, constructed as described above, were assembled and then operated by motoring in which a valve train system in a diesel engine was replicated. After 480 hours of said motoring, depths of wear on the contacting and sliding surfaces of rocker arm 2, wear-resistant member 3, and recess 4 were measured. The total sum of these wear depths (amount of wear) is shown in Table I. Note that for rocker arm 2, the difference in profiles before and after the test was defined as the wear depth, and for wear-resistant member 3, profiles of the surface making contact with rocker arm 2 and the surface making contact with the bottom surface of recess 4 were measured by a surface roughness measurement instrument before and after the test to define the sum of profile differences in the two surfaces as the wear depth. In addition, for the bottom surface of recess 4, the difference of the bottom surface profile before and after the test was measured by the surface roughness measurement instrument and was defined as the wear amount.

In addition, wear-resistant members with a cross section profile shown in Fig. 5 having other attributes identical to specimen 9 were also prepared as test specimens, which were then provided with a chamfer of about the same size as in specimen 9 at the perimeter edge of the bottom surface and a chamfer with the width of 0.03 to 1.8 mm at the perimeter edge of the top surface. This group of specimens was subjected to an evaluation test of which conditions were identical to the test mentioned above. The results of the test showed that the amount of wear on the wear-resistant member having a step as shown in Fig. 5 could be further reduced by 5 to 10 % by providing the chamfer on the top surface in addition to the chamfer on the bottom surface.

As can be observed from these test results, even though degrees of freedom of rotation and movement were given to the wear-resistant member by providing play inside recess 4, wear-resistant members with edges left at the perimeter of the bottom surface had large amounts of wear at the contact surface, and wear-resistant members with a edge removed at the perimeter of the bottom surface exhibited suppressed amounts of wear on the contact surface. This was because, since the wear-resistant members smoothly could move and rotate without being caught by the bottom surface of the recess, the contact points varied.

In addition, from the results of specimens 9, 13 and 14, it was found that among ceramics with almost similar mechanical properties, ceramics having better heat conductivity were more wear-resistant. This was because such ceramics conducted better the heat generated at the time of contacting outside and therefore the amount of temperature rise in the neighborhood of the wear-resistant member was kept low. This was also true for the second and third embodiments of the present invention.

In addition, wear-resistant members with rounded chamfers having the same width w described in Table I were prepared and subjected to the same evaluation, and the result showed substantially the same tendency as the evaluation results of the specimen group having flat chamfers. The same result as mentioned above were confirmed by performing the same evaluation regarding specimens having different sizes of flat and rounded chamfers and chamfers with various cross sections along the perimeter, prepared in such a way that they were not caught by the counter part.

**Table I**

| Specimen number | Material for wear resistant member | Width "w" of chamfer (mm) | Radius of corner fillet in the recess of the second part (mm) | Amount of wear (mm) | Notes |
|---|---|---|---|---|---|
| *1 | Silicon nitride 1 | No chamfer | 0.10 | 0.34 | |
| 2 | " | 0.03 | " | 0.25 | w<R |
| 3 | " | 0.05 | " | 0.21 | w<R for all specimens below |
| 4 | " | 0.10 | " | " | |
| 5 | " | 0.15 | " | 0.19 | |
| 6 | " | 0.20 | " | 0.18 | |
| 7 | " | 0.25 | " | 0.16 | |
| 8 | " | 0.40 | " | 0.14 | |
| 9 | " | 0.50 | " | 0.13 | Heat conductivity 22 W/mK |
| 10 | " | 1.50 | " | 0.17 | |
| 11 | " | 1.60 | " | 0.20 | w=20% of diameter |
| 12 | " | 1.80 | " | " | w > 20% of diameter |
| 13 | Silicon nitride 2 | 0.50 | " | 0.15 | Heat conductivity 15 W/mK |
| 14 | Silicon nitride 3 | " | " | 0.17 | Heat conductivity 10 W/mK |
| 15 | Coating of silicon nitride 1 on Fe-Cr-based substrate | " | " | 0.16 | |
| 16 | Layer of silicon nitride 1 applied on the same substrate as above by adhesive | " | " | 0.17 | |
| 17 | Silicon carbide | " | " | 0.21 | Heat conductivity 60 W/mK |

| | | | | | |
|---|---|---|---|---|---|
| Note: * refers to reference example. | | | | | |
| Note: Silicon nitride 1 was a silicon nitride ceramics with the heat conductivity of 22 W/mK, bending strength of 900 MPa, and Vickers hardness of 1,500. Silicon nitrides 2 and 3 were silicon nitride ceramics having the same bending strength and Vickers hardness as silicon nitride 1 and the heat conductivity of 15 W/mK and 10 W/mK, respectively. Specimen 15 was prepared by forming a layer having the same structure as silicon nitride ceramic 1 and Vickers hardness of 1500 on the above mentioned substrate by chemisorption and specimen 16 was prepared by pasting a plate of silicon nitride 1 on the sliding and contacting surface of the same substrate. Silicon carbide of specimen 17 was a silicon carbide ceramic with the heat conductivity of 60 W/mK, bending strength of 600 MPa and Vickers hardness of 1,300. | | | | | |

For another set of evaluation tests, wear-resistant members of silicon nitride 1 with the same chamfer as in specimen 9 and parts receiving the wear-resistant member of the valve bridge with the same radius of corner fillet as the ones used with specimen 9, but with different inner diameters as shown in Table II were prepared. These were subjected to the same test as above. The results are shown in Table II.

From the results, it was found that the amount of wear was kept low when the difference S between the outer diameter D1 of the wear-resistant member and the inner diameter D0 of the recess of counter part was 0.03 mm or more and the ratio S/D1 was in the range of approximately 10% or less.

Furthermore, results with the same tendency were also confirmed by conducting similar tests for chamfer widths in the range of 0.05 mm up to 20% of D1 by varying D1. This effect of S/D1 was also true for parts of the second and third embodiments of the present invention.

**Table II**

| Specimen number | Inner diameter D0 of receiving part (mm) | Outerdiameter D1 of wear-resistant member (mm) | S (D0-D1) (mm) | S/D1 (%) | Amount of wear (mm) | Notes |
|---|---|---|---|---|---|---|
| *18 | 8.02 | 8.00 | 0.02 | 0.25 | 0.29 | |
| 19 | 8.03 | " | 0.03 | 0.38 | 0.21 | |
| 20 | 8.05 | " | 0.05 | 0.63 | 0.20 | |
| 21 | 8.10 | " | 0.10 | 1.25 | 0.15 | |
| 22 | 8.15 | " | 0.15 | 1.88 | 0.14 | |
| 23 | 8.40 | " | 0.40 | 5.00 | " | |
| 24 | 8.60 | " | 0.60 | 7.50 | 0.15 | |
| 25 | 8.80 | " | 0.80 | 10.00 | 0.16 | 10% of outer diameter |
| 26 | 8.90 | " | 0.90 | 11.25 | " | |

| | | | | | | |
|---|---|---|---|---|---|---|
| Note: * refers to reference example. | | | | | | |

Further, note that even though the example of a valve bridge and a rocker arm in a valve train system of a diesel engine is used in the descriptions herein, the benefits of the present invention can be obtained in such two parts, which are not necessarily valve train system parts, that move while making contact with a wear-resistant member and experience sliding friction at the surfaces in contact with the wear-resistant member due to the movement.

As has been described, a wear-resistant sliding part of the present invention has a wear-resistant member with a chamfer to eliminate an edge at the perimeter of its bottom surface, wherein said wear-resistant member is inserted into a recess provided in one part in a state that it is prevented from falling off from the recess and at the same time allowed in the recess to rotate and move in parallel directions to the bottom surface. It also incorporates the other part that makes contact with the top surface of the wear-resistant member so that the two parts move in linkage with each other. Therefore, the wear-resistant member moves and rotates smoothly in the recess to cause the contact point to move reliably, leading to the suppression of wear at the contact surface and the extension of life time of the parts.

In addition, other specimens having shapes similar to specimens 1 through 12 and 18 through 26 were prepared. One group of the new specimen assemblies had all the three dimensions of approximately 3 times those of the original specimens, and the other group had the dimensions of approximately 1/3 times of those of the original specimens. The former group and the latter group were tested by using respectively larger and smaller driving devices than the one described above, and were driven as described above to check wear. As a result, substantially the same tendency of varying amounts of wear as described above was observed depending on the width w of chamfer and the ratio S/D1. In addition, a tendency of suppressed amounts of wear was observed for the range of the clearance ratio up to 10%. From these results, the tendency between the chamfer and wear on the sliding and contacting surface of the sliding part of the present invention was found to be present without regard to the size of the part. This was also true for the second and third embodiments of the present invention.

### Embodiment 2

Recess 4 with a flat bottom surface was provided in valve bridge 1 of a four-valve diesel engine shown in Fig. 6, and wear-resistant member 3 described in Table III, made from silicon nitride ceramics or other materials, was inserted in said recess 4, with rocker arm 2 arranged to make contact with the top surface of said wear-resistant member 3. Both wear-resistant members 3 with a convex shape bottom surface and wear-resistant members 3 with a flat bottom surface (specimen 27) were used. The flatness of the bottom surface of wear-resistant member 3 is as shown in Table III. In addition, the outer diameter of wear-resistant member 3 was made to be 8.0 mm, and wear-resistant member 3 was inserted into recess 4, of which inner diameter was 8.15 mm, with stopper member 5 mounted to prevent wear-resistant member 3 from falling off. Wear-resistant member 3 was kept in a state in which it was allowed to rotate in recess 4 and to move in the radial direction within the range of play between the member and the inner radial surface of recess 4. Further, although not listed in the table, note that the surface roughness (Ra) of the bottom, side and top surfaces of the wear-resistant member was to be 0.4 µm and no chamfer was provided at the perimeter of the bottom surface, and that the size of corner fillet in the receiving part was arranged to be 0.04 mm, which was slightly larger than the bottom edge size of wear resistant member.

Valve bridge 1 and rocker arm 2 as thus constructed were assembled and subjected to a wear test conducted under the same conditions for embodiment 1. The results are shown in Table III.

As can be observed from these test results, even though degrees of freedom of rotation and movement in the parallel direction to its bottom surface were given to wear-resistant members by providing play inside recess 4, wear-resistant members with a flat bottom surface had larger amounts of wear at the contact surface, whereas wear-resistant members with a convex bottom surface exhibited suppressed amounts of wear on the contact surface. The cause of this was nothing but a fact that better lubricity was provided to the contacting interface between the wear-resistant member and the valve bridge and the wear-resistant member was made to move and rotate smoothly, which caused motion of the position of the contact point.

Furthermore, although not listed in Table III, other wear-resistant members with the same flatness values as shown in Table III but with convex bottom surfaces having different convex and concave shapes as to, for example, frequency, amplitude, and shape of convexity and concavity were prepared and subjected to the same evaluation. The results exhibited substantially the same tendency as mentioned above between the flatness and the amount of wear, without regard to convex and concave shapes.

Assemblies having combinations of attributes of specimen 28 and the flatness of the bottom surface of the second part of 0.04 µm were also subjected to the same test. Since the flatness of the bottom surface of wear-resistant members was large, a gap between the convex portion of the wear-resistant member and the bottom surface of the second part was formed, and thus the amount of wear increased by 1 to 10%.

Note that even though the example of a valve bridge and a rocker arm in a valve train system of a diesel engine was used in the descriptions herein, the benefits of the present invention can be obtained in such two parts, which are not necessarily valve train system parts, that move while making contact with a wear-resistant member and experience sliding friction at the contacting portions due to the movement.

**Table III**

| Specimen number | Material for wear resistant member | Flatness of bottom surface (µm) | Amount of wear (mm) | Notes |
|---|---|---|---|---|
| *27 | Silicon nitride 1 | 0.03 | 0.35 | Heat conductivity 22 W/mK |
| 28 | " | 0.05 | 0.18 | |
| 29 | " | 0.10 | 0.16 | |
| 30 | " | 0.20 | 0.15 | |
| 31 | " | 0.25 | 0.14 | |
| 32 | " | 0.30 | 0.11 | |
| 33 | " | 0.50 | " | |
| 34 | " | 1.00 | " | |
| 35 | " | 1.50 | " | |
| 36 | " | 2.00 | 0.12 | |
| 37 | " | 2.50 | 0.18 | |
| 38 | Silicon nitride 2 | 1.50 | 0.21 | Heat conductivity 15 W/mK |
| 39 | Coating of silicon nitride 1 on Fe-Cr-based substrate | 0.50 | 0.13 | |
| 40 | Silicon carbide | 1.50 | 0.18 | Heat conductivity 60 W/mK |

| | | | | |
|---|---|---|---|---|
| Note: * refers to reference example. | | | | |

Next, for another set of evaluation test, wear-resistant members of silicon nitride 1 with the same flatness of bottom surface as in specimen 35 and valve bridges receiving the wear-resistant member with the inner diameter modified to be as shown in Table II of embodiment 1 were prepared. These were subjected to the same test as described above. From the results, it was confirmed that the amount of wear was suppressed to be low when the difference S between the outer diameter D1 of the wear-resistant member and the inner diameter D0 of the recess of counter part was 0.03 mm or more and the ratio S/D1 was in the range of 10% or less, or when R was greater than w if the width of chamfer was kept constant.

### Embodiment 3

Recess 4 was provided in valve bridge 1 of a four-valve diesel engine shown in Fig. 10, and wear-resistant member 3 described in Table IV, made from silicon nitride ceramics or other materials was inserted in said recess 4, with rocker arm 2 arranged to make contact with the top surface of said wear-resistant member 3. The surface roughness of bottom surface 3a, side surface 3b, and top surface 3c of wear-resistant member 3 was as shown in Table IV The outer diameter of wear-resistant member 3 was made to be 8.0 mm, and wear-resistant member 3 was inserted into recess 4, of which inner diameter was 8.15 mm, with stopper member 6 mounted to prevent wear-resistant member 3 from falling off. Wear-resistant member 3 listed in Table IV was kept in a state in which it was allowed to rotate in recess 4 and to move in the parallel direction to its bottom within the range of play between the member and the inner radial surface of recess 4. In addition, although not included in the table, note that the perimeter of bottom surface of the wear-resistant member was not chamfered and the radius of corner fillet of the counter part was set to 0.04 mm, which was slightly larger than the bottom edge size of wear resistant member. In addition, the flatness of the wear-resistant member was 0.03 µm.

Valve bridge 1 and rocker arm 2 as thus constructed were assembled and subjected to a wear test conducted under the same conditions as those for embodiment 1. The results are shown in Table IV

The surface roughness (Ra) of recess 4 of valve bridge 1 used in the test was 6.0 µm for bottom surface 4a, and 0.7 µm for inner radial surface 4b. The surface roughness (Ra) of the contacting surface of rocker arm 2 (surface that came in contact with the top surface of wear-resistant member 3) was 0.09 µm.

As can be observed from these test results, even though degrees of freedom of rotation and movement were given to the wear-resistant member by providing play inside recess 4, wear-resistant members with rougher surface roughness on the bottom, side, and top surfaces had larger amounts of wear at the contact surface, whereas wear-resistant members with at least one surface of the bottom, side, and top surfaces was finished with the surface roughness (Ra) of 0.2 µm or less exhibited suppressed amounts of wear on the contact surface. This was because the friction coefficient of either of the contacting surfaces became lower and allowed the wear-resistant member to move or rotate smoothly and made the contact point movable.

Furthermore, note that even though the example of a valve bridge and a rocker arm in a valve train system of a diesel engine was used in the descriptions herein, the benefits of the present invention can be obtained in such two parts, which are not necessarily valve train system parts, that move while making contact with the wear-resistant member and experience sliding friction at the surfaces in contact with the wear-resistant member due to the movement.

**Table IV**

| Specimen number | Material for wear resistant member | Surface roughness Ra (µm) | | | Amount of wear (mm) |
|---|---|---|---|---|---|
| | | Bottom surface | Side surface | Top surface | |
| *41 | Silicon nitride 1 | 0.25 | 0.25 | 0.25 | 0.35 |
| 42 | " | 0.20 | 0.15 | 0.15 | 0.25 |
| 43 | " | 0.15 | " | " | 0.17 |
| 44 | " | 0.10 | " | " | 0.14 |
| 45 | " | 0.05 | " | " | 0.12 |
| 46 | " | 0.15 | 0.20 | " | 0.18 |
| 47 | " | " | 0.10 | " | 0.13 |
| 48 | " | " | 0.05 | " | 0.08 |
| 49 | " | " | 0.15 | 0.20 | 0.16 |
| 50 | " | " | " | 0.10 | 0.12 |
| 51 | " | " | " | 0.05 | 0.10 |
| 52 | Silicon nitride 2 | " | " | 0.15 | 0.15 |
| 53 | Coating of silicon nitride 1 on Fe-Cr-based substrate | " | " | " | 0.16 |
| 54 | Silicon carbide | " | " | " | " |

| | | | | | |
|---|---|---|---|---|---|
| Note: * refers to reference example. | | | | | |

Next, for another set of evaluation test, wear-resistant members of silicon nitride 1 with the same surface roughness for each surface as in specimen 49 and valve bridges receiving the wear resistant member with the inner diameter modified to be as shown in Table II of embodiment 1 were prepared. These were subjected to the same test as described above. From the results, it was confirmed that the amount of wear was suppressed to be low when the difference S between the outer diameter D1 of the wear-resistant member and the inner diameter D0 of the recess of counter part was 0.03 mm or more and the ratio S/D1 was in the range of approximately 10% or less, or when R is greater than w if the width of chamfer was kept constant.

Furthermore, although not listed in Table IV, other wear-resistant members with the flatness values as shown in Table IV but with bottom surfaces having different convex and concave shapes as to, for example, frequency, amplitude, shape, etc. of convexity and concavity were prepared and subjected to the same evaluation. The results exhibited substantially the same tendency between the surface roughness and the amount of wear as in the above results, without depending on convex and concave shapes.

### Embodiment 4

Assemblies having attributes of specimen 9 of embodiment 1 were prepared with wear-resistant members having the following variations: (1) in addition to chamfering, the flatness of the bottom surface was made larger than the mating part and varied in the range of 0.05 µm or more so that the outer portion had a convex shape, (2) in addition to chamfering, the surface was made to be 0.2 µm or less, (3) the bottom surface of specimen 33 of embodiment 2 was arranged to have a convex shape with a flatness within the above-mentioned range at the peripheral side and at least one of the surfaces was controlled to have the surface roughness within the above mentioned range, and (4) in addition to chamfering, the bottom surface was arranged to have a convex shape with the flatness within the above-mentioned range and at least one of the bottom, side, and top surfaces was controlled to have the surface roughness within the range mentioned above. These assemblies were driven under the same conditions as described above and the amount of wear were checked in the same manner as described for embodiment 1. As a result, the above-described groups of assemblies of (1) to (3) exhibited approximately 5 to 15% reduction of wear and the assemblies of (4) produced reduction of wear of approximately 10 to 20% compared with specimen 9. In addition, concurrent use of three types of embodiments as in the case of (4) resulted in approximately 5 to 10% less amount of wear as compared with the cases in which two types of embodiments were used concurrently. As described above, by using the first, second, and third embodiments of the present invention concurrently, a synergistic increase of effects was observed as compared with the case in which only each individual embodiment was applied.

### Industrial Applicability

As has been mentioned, sliding parts of the present invention adopt a mechanism having contacting parts which slide and move in linkage with each other and its contacting mode at the contacting portion uses a contrivance that suppresses amount of wear. Thus, it has longer life than similar mechanisms that have been used conventionally. Therefore, it can be used for severely conditioned sliding portions such as power transmission systems of transportation apparatuses.

## Claims

1. A wear-resistant sliding part comprising:
a first part and a second part that move in linkage with each other; and
a wear-resistant member that stands in between contacting portions of the two parts;
wherein said wear-resistant member is inserted in a recess provided in the second part in a state in which it is protected from falling off and it is allowed in the recess to rotate and move in a parallel direction to a bottom surface of the recess;
wherein a bottom surface of the wear-resistant member makes contact with the bottom surface of the recess and the first part makes contact with the top surface of the wear-resistant member, allowing the first and the second parts to move; and
wherein a perimeter of the bottom surface of said wear-resistant member has a chamfer that eliminates a sharp edge.

2. The wear-resistant sliding part according to claim 1, wherein the chamfer at the perimeter of the bottom surface of said wear-resistant member is larger than a rounded fillet or a flat fillet of said recess.

3. The wear-resistant sliding part according to claim 1 or claim 2,
wherein a chamfer is also formed to eliminate a sharp edge at a perimeter of a top surface of said wear-resistant member.

4. A wear-resistant sliding part comprising:
a first part and a second part that move in linkage with each other, and
a wear-resistant member that stands in between contacting portions of the two parts;
wherein said wear-resistant member is inserted in a recess provided in the second part in a state in which it is protected from falling off from the recess and it is allowed in the recess to rotate and move in a parallel direction to a bottom surface of the recess;
wherein a bottom surface of the wear-resistant member makes contact with the bottom surface of the recess and the first part makes contact with the top surface of the wear-resistant member, allowing the first and the second parts to move; and
wherein the bottom surface of said wear-resistant member making contact with an inner radial surface of said recess has a flatness in the range of 0.05 to 20 µm and a convex shape of which outer side is raised up at the perimeter side.

5. The wear-resistant sliding part according to claim 4, wherein the flatness of the bottom surface of said wear-resistant member is larger than that of the bottom surface of the recess provided for said second part.

6. A wear-resistant sliding part comprising:
a first part and a second part that move in linkage with each other; and
a wear-resistant member that stands in between contacting portions of the two parts;
wherein said wear-resistant member is inserted in a recess provided in the second part in a state in which it is protected from falling off from the recess and it is allowed in the recess to rotate and move in a parallel direction to a bottom surface of the recess;
wherein the bottom surface of the wear-resistant member makes contact with the bottom surface of the recess and the first part makes contact with the top surface of the wear-resistant member, allowing the first and the second parts to move; and
wherein at least one of the bottom surface of the wear-resistant member making contact with the bottom surface of said recess, a side surface of the wear-resistant member making contact with an inner radial surface of said recess, and a top surface of the wear-resistant member making contact with said first part has a surface roughness (Ra) of 0.2 µm or less.

7. The wear-resistant sliding part according to any one of claims 1 through 6, wherein the difference between an outer diameter of said wear-resistant member and an inner diameter of said recess is 0.03 mm or more.

8. The wear-resistant sliding part according to any one of claims 1 through 7, wherein said wear-resistant member is made from materials including silicon nitride ceramics.

9. The wear-resistant sliding part according to any one of claims 1 through 8, wherein the two parts moving in linkage with each other are a valve bridge and a rocker arm in a valve train system of a diesel engine,
wherein said wear-resistant member is inserted into the recess provided at an upper portion of the valve bridge and a tip of the wear-resistant member is arranged to make contact with the rocker arm.

10. A sliding mechanism using the sliding part according to any one of claims 1 through 9.
